(19) Europäisches Patentamt

European Patent Office

Office européen des brevets

(11) **EP 2 652 977 B1**

(12) **EUROPEAN PATENT SPECIFICATION**

(45) Date of publication and mention
of the grant of the patent:
**23.05.2018 Bulletin 2018/21**

(21) Application number: **10860640.1**

(22) Date of filing: **17.12.2010**

(51) Int Cl.:
*H04L 29/08* (2006.01)     *H04M 3/42* (2006.01)
*H04M 3/493* (2006.01)

(86) International application number:
**PCT/SE2010/051419**

(87) International publication number:
**WO 2012/082038 (21.06.2012 Gazette 2012/25)**

(54) **SERVER AND METHOD FOR CONVEYING A SET OF CONTACT IDENTIFICATION DATA TO A USER EQUIPMENT**

SERVER UND VERFAHREN ZUR WEITERLEITUNG EINES KONTAKTIDENTIFIZIERUNGSDATENSATZES AN EIN BENUTZERGERÄT

SERVEUR ET PROCÉDÉ POUR TRANSMETTRE UN ENSEMBLE DE DONNÉES D'IDENTIFICATION DE CONTACT À UN ÉQUIPEMENT UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.10.2013 Bulletin 2013/43**

(73) Proprietor: **Telefonaktiebolaget LM Ericsson (publ)**
**164 83 Stockholm (SE)**

(72) Inventors:
• **KVERNVIK, Tor**
**S-187 42 Täby (SE)**
• **BJÖRK, Jonas**
**S-112 33 Stockholm (SE)**

• **LIDSTRÖM, Mattias**
**S-112 24 Stockholm (SE)**

(74) Representative: **Brann AB**
**P.O. Box 3690**
**Drottninggatan 27**
**103 59 Stockholm (SE)**

(56) References cited:
EP-A2- 1 919 247      WO-A1-02/059733
WO-A1-2009/112072     US-A1- 2006 217 111
US-A1- 2006 229 063   US-A1- 2006 229 063
US-A1- 2007 061 336   US-A1- 2007 121 911
US-A1- 2007 274 511   US-A1- 2009 234 826
US-A1- 2010 306 191

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 652 977 B1

## Description

### Field of the invention

The invention relates to devices and methods for conveying a set of contact identification data to a user equipment associated with a communication system.

### Background of the invention

Wireless communication units are nowadays an expected and natural part of the everyday life of a great deal of people. Many of these wireless communication units comprise a phonebook into which the user may enter contact information such as mobile phone number, landline telephone number, e-mail address, etc. for his or her various contacts, e.g. friends, colleagues, business associates etc. It is quite natural that some people are contacted very frequently, while others are contacted more seldom. Many users find it time consuming and possibly also complicated to store contact information in the phonebook. Therefore, phone numbers that are dialed less frequently may not be found worth adding thereto. Further, it is not unusual to forget to update the phonebook with new or modified contact information. The phonebook is then not reliable and further lowers the user's interest and motivation for using it.

Another important aspect of the willingness to use and update the phonebook lies in the user friendliness of the wireless communication unit. If the user is required to perform many operations, e.g. pushing many keys, for entering or modifying contact information, he may choose not to bother about using the phonebook and instead use the keyboard of the wireless communication unit for entering e.g. a phone number directly. However, to enter phone numbers via the keyboard is time consuming and increases the risk of the user entering wrong digits by mistake or believing to remember the number and misplacing a few digits. On the other hand, also the manual entering of a phone number is perceived by many users as being both difficult practically and time-consuming, since the keys of the wireless communication units generally have become quite small.

Further still, when changing wireless communication unit or if the user has several different wireless communication units, it is time-consuming and often perceived to be difficult to add all the contact information to the new wireless communication unit.

Some of the above-described issues have been addressed, for example in that means have been provided for suggesting and displaying in the wireless communication unit a phone number when the user has entered only a few digits.

Aspects of dialing errors have been addressed e.g. in US 6,285,753 B1, wherein a system and method are disclosed for comparing input numbers with stored numbers, and correcting the input number based on an error likelihood measure.

However, in view of, inter alia, the desire to easily and swiftly set up e.g. phone call, there is a continuous need and desire for improvements in this regard within this field of technology.

Further prior art is presented in the following publications.

US patent application US 2006/229063 A1 relates to a system and/or a method that facilitates automatically updating contact information. The system includes an interface that receives identification data related to a first mobile communication device. The system further includes a contact update component which provides contact information associated with the first mobile communication device to a second mobile communication device and automatically update such contact information. The update can be before, during, and/or after a communication session between the first mobile communication device and the second mobile communication device. Moreover, the update may be applied to an address book and/or a memory storage associated with the second mobile communication device.

US patent application US 2009/234826 A1 relates to a data constraint framework solution which addresses data quality issues by standardizing, verifying, matching, consolidating and merging data records using powerful inexact matching logic and search reduction technologies. The data conditioning framework uses these technologies to more efficiently condition data to improve the quality of data and/or resolve quality data issues such as incomplete, inaccurate and duplicate data records. The data conditioning framework is used to "cleanse" incorrect, incomplete and duplicate data from a data source, such as an information system. The data conditioning framework uses the following approximate searching and matching techniques to improve the efficiency of the approximate matching, reduce the search space for approximate matching, and improve the speed of executing approximate searches and matches: 1) inexact trimmed matching, 2) adaptive search ordering, 3) cascading search space reduction, 4) tiered and metric indexing, and 5) domain knowledge matching.

US patent application US2010/306191 A1 relates to a computer-implemented search method which includes receiving a registration request from each of one or more computer applications installed on a computing device and registering the applications in response to the request. The registration request indicates an intent by the application to receive search query information from a search application associated with the device. The method further includes receiving user input on the device in the form of a query and providing the query to the one or more registered applications.

The method further includes receiving responses from the one or more registered applications that include data that is managed by the one or more registered applications. Furthermore, the method includes integrating the responses into a result set and presenting the result set with the computing device.

**Summary of the invention**

An object of the invention is to provide improvements related to the entering of contact information data in a user equipment.

The object is according to a first aspect of the invention achieved by a server for conveying a set of contact identification data to a user equipment associated with a communication system, the server comprising: a receiving unit for receiving contact identification data from the user equipment, a data storage module comprising subscriber specific data, and an analyzing module arranged to: analyze received contact identification data, wherein the analysis determines the received contact identification data to be an incomplete set of contact identification data or a complete set of contact identification data, and provide the user equipment with one or more suggested sets of contact identification data based on: the analysis, the subscriber specific data and global data of an analytics database, wherein the global data comprises complete call log data of an operator of the communication system, wherein in the event the analysis determines the received contact identification data to be an incomplete set of contact identification data, the analyzing module is arranged to enable an autocomplete function which suggests a complete set of contact identification data, as a suggested set of contact identification data, based on the incomplete set of contact identification data, and wherein in the event the analysis determines the received contact identification data to be a complete set of contact identification data, the analyzing module is arranged to enable a wrong number function which suggests a corrected set of contact identification data based on the received contact identification data, as a suggested set of contact identification data, based on the received contact identification data. In contrast to known prior art, which fail to address the aspect of a subscriber being able to easily access infrequently used contact identification data, e.g. a phone number seldom used, the invention enables the use of such infrequently used contact identification data. In particular, global data that is available in the communication network and comprises identifying contact identification data extensively used within the whole communication network, but not necessarily frequently used by each particular subscriber can be easily provided to the subscriber. The invention facilitates user selection of contact identification data. Further, the subscriber may change user equipment and still immediately be able to have access to and be provided with suggested sets of contact identification data, since the subscriber specific data and global data needed for this end is available from the server.

In one embodiment, the analyzing module is arranged to compare the received contact identification data with the subscriber specific data and/or with the global data and to provide subscriber specific data or global data having a set maximum edit distance to the received contact identification data as the suggested set of contact identification data. In another embodiment, in the event the analysis determines the received contact identification data to be a set of complete contact identification data, the analyzing module is arranged to: detect the complete contact identification data to be erroneous complete contact identification data, prior to enabling the wrong number function to suggest the corrected set of contact identification data. The object is according to a second aspect of the invention enabled by a method performed by a server for conveying a set of contact identification data to a user equipment associated with a communication system, the method comprising: receiving contact identification data from the user equipment, analyzing received contact identification data, wherein the step of analyzing the received contact identification data comprises determining the received contact identification data to be an incomplete set of contact identification data or a complete set of contact identification data, and providing the user equipment with one or more suggested sets of contact identification data based on: the analysis, user specific data and global data of an analytics database, wherein the global data comprises complete call log data of an operator of the communication system, wherein in the event the analysis determines the received contact identification data to be an incomplete set of contact identification data, an analyzing module is arranged to enable an autocomplete function which suggests a complete set of contact identification data, as a suggested set of contact identification data, based on the incomplete set of contact identification data, and wherein in the event the analysis determines the received contact identification data to be a complete set of contact identification data, the analyzing module is arranged to enable a wrong number function which suggests a corrected set of contact identification data based on the received contact identification data, as a suggested set of contact identification data, based on the received contact identification data. In one embodiment, the suggested set of contact identification data comprises a phone number and the method further comprises transmitting the phone number to a directory server; and receiving from the directory server text related to the phone number. Providing the subscriber with text related to the phone number facilitates for the subscriber to select between the suggested sets of contact identification data.

In a variation of the above embodiment, the method comprises the further step of transmitting to the user equipment the phone number and the text related to the phone number.

Further features and advantages thereof will become clear upon reading the following description and the accompanying drawings.

**Brief description of the drawings**

Figure 1 illustrates an embodiment of the invention, implemented in a communication network.

Figure 2 illustrates weighting and filtering of call logs.

Figure 3 illustrates another embodiment of the invention, implemented in a user equipment.

Figure 4 illustrates a procedure for updating a subscriber call log.

Figure 5 illustrates a case wherein a subscriber has dialed a wrong number.

Figure 6 illustrates an autocomplete function for dialed digits.

Figure 7a illustrates schematically a server.

Figure 7b illustrates schematically an embodiment of the server of figure 7a.

Figure 8 illustrates a flow chart over steps of a method in a server.

Figure 9 illustrates a flow chart over steps of another embodiment of the method of figure 8.

Figure 10a illustrates schematically a user equipment.

Figure 10b illustrates schematically an embodiment of the user equipment of figure 10a.

Figure 11 illustrates a flow chart over steps of a method in a user equipment.

Figure 12 illustrates a flow chart over steps of another embodiment of the method of figure 11.

Figure 13 illustrates a flow chart over steps of another embodiment of the method of figure 11 or figure 12.

**Detailed description of embodiments of the invention**

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits, and methods are omitted so as not to obscure the description of the invention with unnecessary detail. Like numbers refer to like elements throughout the description.

In the following devices and methods for conveying a set of contact identification data to a user equipment will be described. The contact identification data is exemplified throughout the description by phone number(s) but the contact identification data is not restricted thereto. An example of another contact identification data is e-mail addresses. Another example of contact identification data is IP-addresses, e.g. a caller dialing 192168001010 could correspond to the IP-address 192.168.1.10. Another example of contact identification data is URI(s) (Uniform Resource Identifier), such as a SIP (Session Initiation Protocol) address,
e.g. sip:user:password@host:port;uri-parameters?headers.

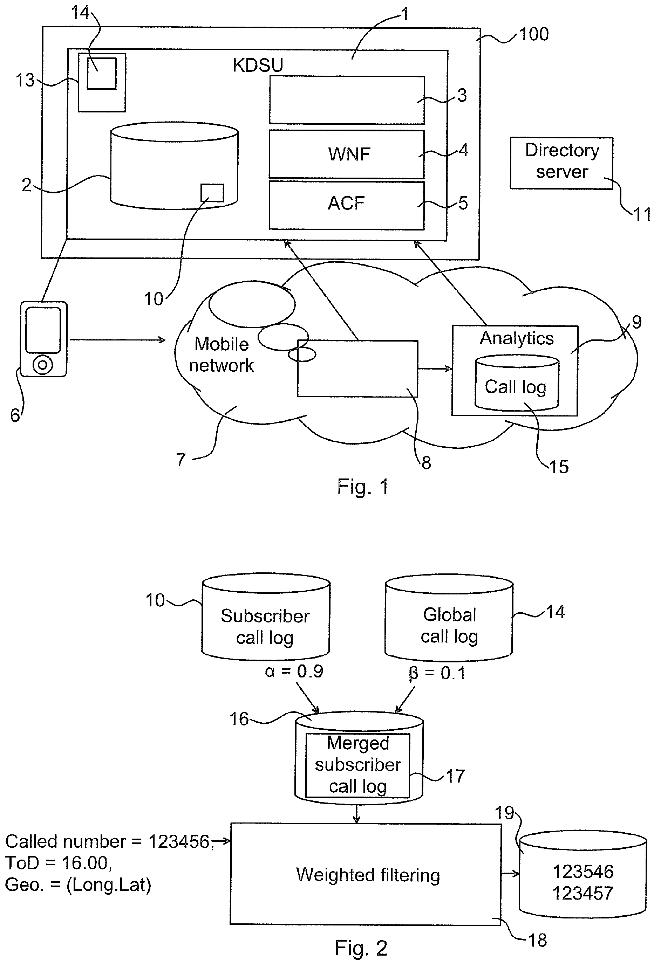

Figure 1 illustrates a first embodiment of the present invention. Briefly, a keyboard dialing support unit 1, in the following denoted KDSU 1, is provided for offering calling support to a user of a user equipment 6. In this embodiment, the KDSU 1 is implemented as a server 100 of a communication network 7. The server 100, e.g. an application server, is then a server which is configured to act on appropriate messages sent to it.

The KDSU 1 comprises an analyzing module 3, a wrong number function 4, in the following denoted WNF 4, and an autocomplete function 5, in the following denoted ACF 5.

The KDSU 1 further comprises a data storage module 2 comprising call log data for subscribers of the communication network 7. The data storage module 2 may comprise a suitable database and means for retrieving data therefrom, e.g. a database management system, or simply a memory comprising retrievable call log data. The set of call log data for a particular subscriber is in the following denoted subscriber call log 10. Each subscriber call log 10 is updated with subscriber specific data such as all numbers that the subscriber has called, either since a certain predefined, fixed date like the date when the subscription was opened or during a predetermined time, such as the last six months. This updating may be done by retrieving or receiving the most recent data from a charging system 8 of the communication network 7. The updating may be done periodically, for example each hour, each day, each week, etc.

The call log data, e.g. numbers, may be streamed one at the time or in batch files. The format may for example be Call Data Records (CDRs) as directly generated by a traffic node in the communication network 7 or as character-separated value (CSV) files as produced by Charging Mediators. Examples of protocols that can be used in implementing communication between the KDSU 1 and the charging system 8 comprise file transfer protocols (FTP) or simple object access protocol (SOAP) (Web services) representational state transfer (REST) over HTTP.

The KDSU 1 is in an embodiment configured to enable communication with an analytics module available in an analytics database 9 of the communication network 7. The KDSU 1 then receives or retrieves data about the most popular and/or important numbers in the complete communication network 7, which numbers are then used in a weighting algorithm in the KDSU 1. The most popular numbers may for example comprise numbers to places of entertainment, to restaurants, to taxi companies etc. The most important, or prioritized, numbers may for example comprise numbers to rescue and emergency services, to care centers, hospitals, military etc. Such prioritized numbers may be detected in different ways. As an example, rescue numbers are often marked in the operator's network. As these numbers should be given preference in case of congestion in the communication network they are often marked both in the operator's charging system as well as in the operator's number analysis, by means of which the numbers may then be detected. This feature is particularly useful e.g. for a new subscriber who has not yet built up his or her subscriber call log, and is further advantageous in order to identify numbers that are frequently called by other subscribers.

The KDSU 1 may further comprise a global data storage module 13 comprising complete call log 15 data of an operator of the communication network 7 available in the analytics database 9. The global data storage module 13 then comprises a global call log 14 based on data from the complete call log 15 of the operator. Data in the complete call log 15, and thus in the global call log 14, is denoted global data. The global call log 14 is hence derived from the traffic to/from all subscribers in the communication network 7, i.e. all calls made within the communication network 7. The data of the global call log 14 may be a subscriber adapted subset of the complete call log 15, e.g. adapted in accordance with the geographical location of the user equipment 6. In particular, if two or more numbers have the same likelihood of being the intended number, then the number corresponding to the shortest geographical distance to the user's present location could be chosen. The global data may comprise information in accordance with the above mentioned, i.e. the most used number and/or prioritized numbers in the communication network 7. The data in the global data storage module 13 can be retrieved of received from the analytics database 9 and may be updated periodically, e.g. daily, weekly or monthly.

In order to clearly describe the invention, the data storage module 2 comprising the subscriber call log 10 and the global data storage module 13 comprising the global call log 14 have been described as separate entities. However, in another embodiment, they are implemented as a single storage device.

For the particular subscriber a merged subscriber call log 17 may be provided comprising both subscriber specific data and global data. The merged subscriber call log 17 is a weighted list of phone numbers.

When a new phone number is about to be analyzed, the merged subscriber call log 17 is filtered based on an edit distance to the entered digits of a phone number. If there are multiple phone numbers having the same edit distance, a second filtering could be done based e.g. on the geographical location and/or time of day (ToD). The edit distance to the entered digits is a distance, which is the number of operations needed to transform one phone number into another. The operation may be a deletion, i.e. removing one digit, a transposition, i.e. swapping adjacent digits, an alteration, i.e. changing one digit to another or an insertion, i.e. adding a digit. The handling and use of subscriber call log 10, global call log 14 and merged subscriber call log 15 will be described next in more detail.

Figure 2 illustrates weighting and filtering of the call logs. The subscriber call log 10 and the global call log 14 are both weighted based on recency and frequency of the called phone numbers. This means that phone numbers that have been dialed more recently and more frequently will get a higher ranking. The ranking enables a swifter handling by the KDSU 1 in that it is able to suggest the phone numbers in a ranking order, wherein the phone number that is most likely that the subscriber intends to call has the highest ranking, the next most likely phone number has the next highest ranking etc. That is, calls that the subscriber makes more frequently and more recently are assumed to be phone numbers more likely that the subscriber will call again.

The interwork between the data storage module 2 and the global data storage module 13 can be implemented in different ways. In figure 2, an embodiment is illustrated wherein global data of the global data storage module 13 and subscriber specific data of the data storage module 2 are merged. The subscriber call log 10 comprising per subscriber called phone numbers and the global call log 14 comprising phone numbers called within the communication network 7 are input to a merging call log unit 16, which provides a merged subscriber call log 17. The subscriber call log 10 and the global call log 14 are merged in the merging call log unit 16 so as to give phone numbers from the subscriber call log 10 higher priority than the phone numbers of the global call log 14. Thereby, numbers from the subscriber call log 10 are prioritized over numbers from the global call log 14 if there are multiple numbers in the merged subscriber call log 17 with the same edit distance based on the entered digits. Different weighting factors, $\alpha$ and $\beta$ may be used for this purpose, wherein the weighting factor $\alpha$ for subscriber call log is higher than the weighting factor $\beta$ for the global call log, $\alpha$ and $\beta$ e.g. equaling 0.9 and 0.1, respectively.

The weighted merged subscriber call log 17 is used in order to enable retrieval of the phone numbers that are closest to the input phone number, i.e. most likely that the user wants to use when a phone number or part of a phone number as entered by a subscriber is received in the KDSU 1. Further parameters may also be used in the weighting procedure, as is illustrated in the figure. Geographical location of the subscriber and time of day are two examples. These parameter may be used based on the likelihood of some phone numbers being more likely to be called at certain locations and/or at certain time of day, e.g. at the location of a local restaurant between 15 p.m. and 19 p.m. One or more phone numbers are then provided for presentation to the subscriber, for example on a screen of a user equipment, illustrated at reference numeral 19. The geographical location may for example be in the format of Cell Global identity (CGI) or geographical coordinates received from e.g. a satellite-based positioning system such as Global Positioning System (GPS) or GALILEO (currently being deployed).

The merged subscriber call log 17, the input phone number and possibly other parameters are thus processed suitably by means of e.g. a processor, illustrated at reference numeral 18. A weighted filtering of the phone numbers of the merged subscriber call log 17 is performed in order to obtain one or more phone numbers most likely to be intended by the user. The output of the processor 18 is provided for presentation on the screen 19 of the user equipment.

The processor 18 and the merging call log unit 16 may be part of the KDSU 1.

In another embodiment the merged subscriber call log 17 is obtained by merging the subscriber call log 10 directly with a weighted list from the analytics database 9 of the communication network 7.

In the following, in accordance with one embodiment of the invention, some background and examples of how to perform the weighting and probability of certain numbers to be the intended numbers will be explained.

Given a phone number, the aim is to choose a most likely correction for that phone number, noting that the "correction" may be the given phone number itself. The aim is to find the correction c, out of all possible corrections, that maximizes the probability P of c for the given phone number n, i.e. the argument of the maximum of the probability P for correction c when the phone number is n:

argmaxc P(c|n)

Stated differently, the function argmaxc enumerates all feasible values of c, and then choose the one that gives the best combined probability score.

In accordance with Bayes' Theorem this is equivalent to:

argmaxc ((P(n|c)P(c))/P(n))

Since P(n) is the same for every possible c, P(n) can be ignored, giving:

argmaxc P(n|c)P(c)

There are three parts of this expression. From right to left we have:

1. P(c) is the probability that a proposed correction stands on its own. This can be thought of as answering the question "how likely is c to be dialed?"
2. P(n|c) is the probability than n would be dialed when the subscriber meant c. This is an error model: it can be thought of as answering the question "how likely is it that the user would type n by mistake when c was intended?"
3. argmaxc is the control mechanism, which enumerates all feasible values of c, and then chooses the one that gives the best combined probability score.

Firstly, P(c): for this a probability model is trained, which in one embodiment plainly speaking means counting how many times each phone number occurs in the relevant lists. This can be done on a global level for all the subscribers and for each single subscriber. So P("90510"), wherein "90510" is a public phone number, would have a relatively high probability in the global model, while P("070-1234567"), best friends phone number, would be near zero and vice versa for the user model. However, one complication is novel phone numbers, i.e. phone numbers that the particular subscriber has not yet called. What happens with a new phone number that was not present in the training data? It would be an unsuccessful approach to say that the probability of a number is zero just because it has not been used yet. There are several possible ways to solve this problem; one is to treat novel phone numbers as if they indeed have appeared once. This approach is called Laplace smoothing, because parts of the probability distribution that would have been zero are smoothed over, giving them a predetermined small value, for example the smallest possible count.

Next P(n|c): looking into the problem of enumerating the possible corrections c of a given phone number n. As mentioned earlier, the edit distance can be defined as the number of edits it would take to turn one phone number into another. There are several different ways to define the edit distance, one possible alternative is the Damerau-Levenshtein distance. As mentioned above, an edition can be a deletion, i.e. removing one digit, a transposition, i.e. swapping adjacent digits, an alteration, i.e. changing one digit to another or an insertion, i.e. adding a digit. Let us now look at a set of all phone numbers/corrections c that are one edit away from phone number n. This can be quite a large set. For a phone number of size s, there will be s deletions, s-1 transpositions, 26*s alterations and 26*(s+1) insertions giving a total of 54*s+25, of which a few are typically duplicates. However, it is less likely that someone by mistake dials a 1 instead of a 9 as these digits are so far away from each other on the dial pad. It is also probably less likely to make an error on the first digit. Further knowledge can be extracted from charging data records (CDRs), e.g. by determining when two consecutive calls have small enough edit distance, are close in time, and the first one is disconnected which would indicate a wrong number having been dialed. Based on this, a statistical model can be built of which position is most frequently correct. The knowledge can then be used to compute the probabilities of how likely it is to make each insertion, deletion or alteration given the surrounding digits.

The above description for performing the weighting of the call lists are not intended to be limiting for the invention. There are several different ways that could be used for obtaining a weight to a set of phone number and thereby rank the phone number accordingly. Two examples of alternatives to the use of Damerau-Levenshtein distance comprise Hamming distance and Levenshtein distance. Instead of using Laplace smoothing, for example Katz smoothing, or any other smoothing technique could be used. From this it is clear that the weighting may be implemented in different ways.

The above algorithms or parts thereof for use in the weighted filtering may be implemented e.g. by software and/or application specific integrated circuits in the processor 18. Examples of programming language for implementing the above comprise Java, C, C+ and C++.

In the following a particular example of calculation of the edit distance is given. In order to compare the erroneously called number with the numbers from the subscriber call log 10 and the global call log 14 (or the merged subscriber call log 17), the Edit Distance is used to compare the difference between the digits in the erroneously called number and the numbers in the call logs 10, 14. If there are several numbers with the same edit distance a Weighted Distance derived from a number of parameters e.g. Keyboard Distance, global call log versus subscriber call log, geographical distance, Time Of Day distance, recency and frequency etc. is used to detect the number from the call logs 10, 14 that was most likely the intended number. The value of each parameter is normalized between 0 and 1. Below is an example of some of the mentioned parameters. The relative importance of each parameter is configurable and may be adapted in dependence on local conditions. The sum of all relative importance is 1, i.e.

```
Relative Importance of Edit Distance + Relative Importance
of Keyboard Distance + … = 1
```

The weighted edit distance is the sum of the parameters including the relative importance:

```
Weighted Distance = Relative Importance Keyboard Distance x
Keyboard Distance + Relative Importance Subscriber/Global
Call Log x Subscriber/Global Call Log+....
```

Hamming distance is one alternative implementation of the edit distance calculation. The Hamming distance is equal to the number of positions at which the corresponding digits are different. Another way to describe it is the number of substitutions required to change one number to the other or the number of errors that transformed one number to the other.

The Keyboard Distance is the relative distance between two digits on the keyboard. The value is normalized between 0 and 1. Two digits that are next to each other get the weight 0.9. If the distance between the digits is more than one the weight is 0.5. As explained above, it is less likely that someone by mistake dials a 1 instead of a 9 as these digits are so far away from each other on the dial pad, which can be reflected by the Keyboard Distance.

Subscriber/GlobalCallLog is the relative weight depending on if the numbers are from the global call log or the subscriber call log. The weight is normalized between 0 and 1. If the number is from the subscriber call log the weight may be 0.9. If the number is from the global call log the weight may be 0.1. This thus reflects that numbers from the subscriber call log should be chosen in first place.

Example:

The number n that was erroneously called is 2173896. In this example the Relative Importance is the 0.9 for Relative Importance Subscriber/Global Call Log and 0.1 for Relative Importance Keyboard Distance.

In the merged subscriber call log 17 there are 3 numbers:

- A=2173797 from the subscriber call log. Edit distance is 2

- B=2173897 from the subscriber call log. Edit distance is 1. Keyboard Distance is 0.5.

- C=2173895 from the global call log. Edit distance is 1. Keyboard Distance is 0.9

A is excluded due to the edit distance. B and C have the same edit distance. The weighted distance is:

Weighted Distance B= 0.1 x 0.5 + 0.9 x 0.9 = 0.86

Weighted Distance C= 0.1 x 0.5 + 0.9 x 0.1 = 0.14

This means that number B=2173897 is the number with the least distance to the called number. Number B is thus provided as the suggested set of contact identification data.

As mentioned earlier with reference to figure 1, the KDSU 1 enables the provision of two features to the subscriber: ACF 5 and WNF 4.

The ACF 5 is activated to analyze digits of a called phone number in chunks. The size of the chunk is configurable by the user equipment 6 utilizing the KDSU 1 and may be a single digit up to the maximum length of the phone number. When a first chunk of digits is entered by a user, e.g. the first two digits of a phone number, the analysis starts. The first chunk of digits is compared with the first 2 digits in the subscriber call log 10 or merged subscriber call log 17. The subscriber call log 10 is, as mentioned, weighted and the first chunk of digits is therefore compared to the highest weighted phone numbers first. When there are one or more matches, the corresponding complete one or more phone numbers will be presented on the screen of the user equipment 6 as clickable numbers, hence providing the autocomplete function. The subscriber may then conveniently click on a desired phone number and complete a call.

The WNF 4 is activated when all digits in a called phone number have been entered and the subscriber has pushed a call button of the user equipment 6. In an embodiment, the WNF 4 is activated for all calls before a call setup message is sent to the communication network 7. In another embodiment, the WNF 4 is activated when the communication network 7 has responded to the user equipment 6 with an error message, e.g. "This number is not in use" or "Unallocated number".

The WNF 4 is arranged to compare the phone number dialed by the subscriber with the phone numbers in the subscriber's merged subscriber call log 17. An algorithm is used that tries to match the dialed phone number with the phone numbers of the merged subscriber call log 17. The algorithm detects the phone numbers in the merged subscriber call log 17 that is closest to the dialed phone number, i.e. having the highest resemblance. Such resemblance can be detected by determining the edit distance, e.g. requiring a maximum of a certain number of operations to transform into the one another, e.g. requiring a maximum of two operations, or one operation or three or several operations. If there are multiple phone numbers with the same edit distance, the weight of the phone numbers is also considered. That is, the highest weighted phone number of the phone numbers having same edit distance is, in first hand, suggested as the correct phone number.

A maximum edit distance is configurable in order avoid that the difference between the called phone number and the matched phone number is too large to be meaningful. For example, a maximum edit distance of two operations can be set, meaning that a maximum of two operations is required to transform the numbers.

In the typical case, only one suggested clickable phone number is suggested, but it is noted that it may be configurable to present one or several suggested phone numbers. A subscriber calling many numbers that have similar structure may want to display several phone numbers that all have the same edit distance to the wrongly called phone number. This may for example be the case for a company having many phone numbers in a series. The phone numbers may be listed in a chosen priority order, e.g. based on the location of the user and/or time of day.

A further feature is the retrieval of alphabetical data from a directory server 11. The KDSU 1 transmits a phone number to the directory server 11, which transmits in response alphabetical data corresponding to the phone number, the typical case being the name of the subscriber having the phone number. Such messaging could be implemented for example by using a Lightweight Directory Access Protocol (LDAP). The subscriber is then presented with one or more suggested names instead of, or complemented with, one or more suggested phone numbers, which is perceived as more user-friendly by many subscribers.

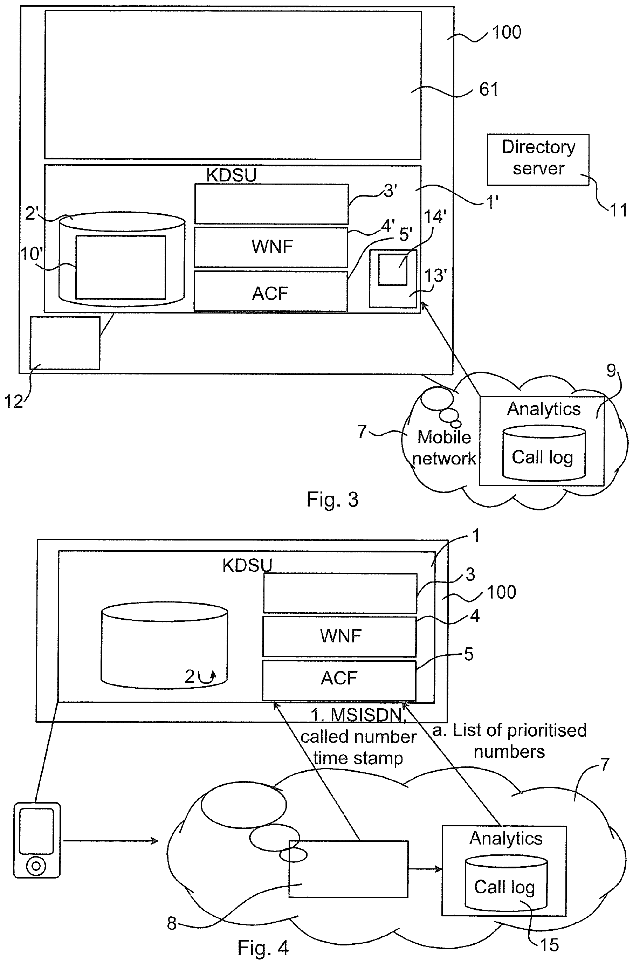

Figure 3 illustrates another embodiment of the invention. The keyboard dialing support module KDSU 1' is in this embodiment implemented in the user equipment 6'. The KDSU 1' comprises an analyzing module 3', a wrong number function 4', an autocomplete function 5', and a data storage module 2' having the corresponding features and capabilities as described above for the first embodiment.

The user equipment 6' comprises a call handler 12. A subscriber call log 10' may be updated from the call handler 12 in the user equipment 6'. Data transfer between the KDSU 1' and the call handler 12 for conveying the suggested phone numbers and also optionally the names associated with the phone numbers may be implemented by an internal Application Programming Interface (API), e.g. Android telephony API or Blackberry PhoneListener API.

As in the embodiment wherein the KDSU functionality is implemented in the communication network 7, a function for adding names to a phone number may be implemented also for this embodiment. In particular, the user equipment 6' may retrieve or receive from the directory server 11 alphabetical data corresponding to the phone number being suggested. Thus, instead of presenting the suggested phone numbers to the subscriber, suggested names are presented.

Next, some use cases will be described with reference to figures 4-6.

In figure 4, the embodiment of figure 1 wherein the KDSU 1 is implemented as a server, in the following denoted KDSU server 100, is used for describing a procedure for updating the subscriber call log 10.

The subscriber call log 10 is updated with call data from the charging system 8 of the communication network 7 and also from the complete call log 15 described above with reference to figure 2. The call data may be continuously streamed from the charging system 8. As illustrated by an arrow from the charging system 8 to the KDSU server 100, different kinds of call data may be useful. For example, MSISDN (also known as Mobile Subscriber Integrated Services Digital Network Number) for identifying the subscriber, the numbers called by the subscriber, time stamps and the geographical location of the subscriber.

A list of prioritized and/or frequently called numbers in the whole communication network 7, described earlier with reference to figure 2, may also be sent on a regular basis. The global call log 14 stored in the global data storage module 13 is then updated with these numbers, illustrated by an arrow from the analytics database 9 to the KDSU server 100.

The KDSU server 100 comprises a device, e.g. a processor executing software code, for checking if the numbers of the call data are already stored in the data storage module 2 or if it is a new number. If a number is already stored in the data storage module 2, then the weight of the number is updated and if it is a new number the weight for it is calculated, whereupon the number is added to the subscriber call log 10.

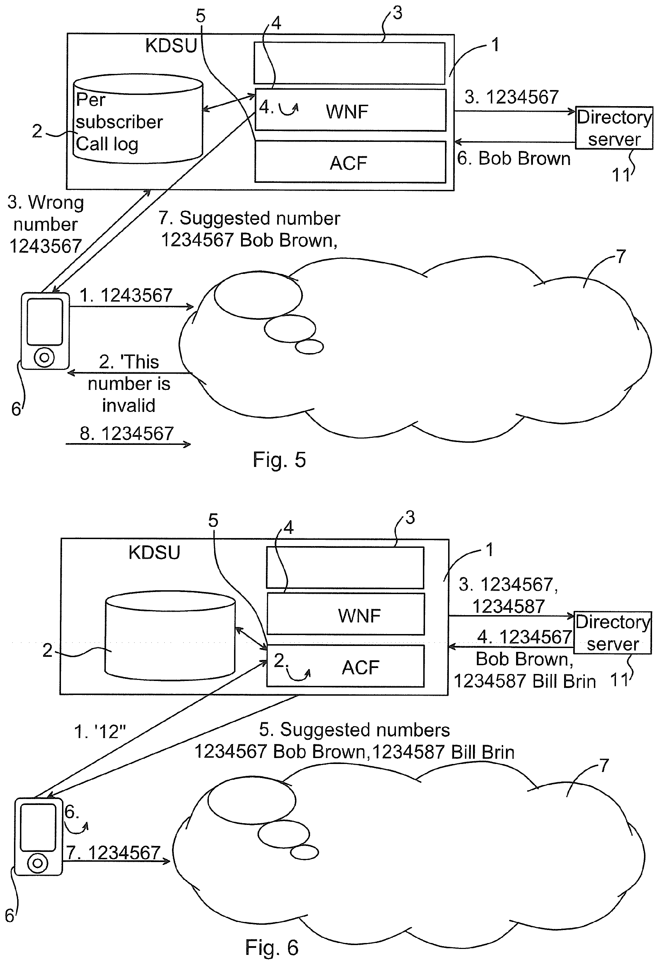

Figure 5 illustrates a case wherein the subscriber has dialed a wrong number. In particular, the subscriber has swapped adjacent digits (transposed) erroneously in the called number. The subscriber intended to call number 1234567 that is the number to one of his friends Bob Brown, but instead erroneously dialed 1243567 (arrow 1). The communication network 7 then replies by transmitting an error message in line with "This number is invalid" (arrow 2). Upon receiving such a message, a client in the user equipment 6 will send a message to the KDSU 1 including the erroneously dialed number (arrow 3). Such message could be implemented by a representational state transfer (REST) message over HTTP. The WNF 4 of the KDSU 1 performs a comparison between the called number and the numbers in the subscriber call log 10. The maximum allowed difference, i.e. edit distance, is used in the comparison check, as described earlier (arrow 4). Upon finding the matching number 1234567, the WNF sends this number to the directory server 11 (arrow 5). The name of the subscriber having number 1234567, i.e. Bob Brown, is returned to the WNF 4 (arrow 6). The suggested name and the number, i.e. Bob Brown 1234567, are returned to the user equipment 6 (arrow 7). Finally, a message in line with "Did you mean 1234567 Bob?" is displayed on a screen of the user equipment 6 and the user may easily execute the call by clicking on the number.

Alternatively, in case the directory server 11 is not used, then upon finding a match, namely number 1234567, the WNF 4 sends this number directly to the subscriber (not illustrated in the figure). The user is then able to easily click on the number and successfully execute the call.

In the above scenario the wrong number is wrong in that it is invalid, and not used by anyone. Another scenario is that the subscriber has dialed a wrong number, i.e. another number than he intended, but which still is a valid phone number, as opposed to the invalid number of the previous scenario. The user thus dials the wrong number and someone is answering. Presumably, the user will hang up rather quickly. In an embodiment, this is used as a trigger to label the last call as erroneous given that it does not already exist in the subscriber call log 10. An additional step can be taken wherein the user is asked to answer whether this was a faulty entry or not, and if confirmed as a faulty entry, the subscriber call log 10 is not updated with the number and the WNF 4 is activated.

Figure 6 illustrates the autocomplete function for dialed digits. When the subscriber has entered the first digit or first few digits, e.g. "12", the autocomplete function ACF 5 of the KDSU 1 will provide the subscriber with numbers that the subscriber has dialed previously and possibly other numbers that start with "12". The subscriber may then scroll down and choose the desired phone number. This is described in more detail next with reference to figure 6.

The subscriber has entered digits "12" and these digits are sent to the ACF 5 (arrow 1). The ACF 5 then compares the digits with the phone numbers in the subscriber call log 10 or the merged subscriber call log 14 (arrow 2).

Upon finding matches to the entered digits, the ACF 5 sends one or more phone numbers 1234567, 1234587 to the directory server 11 (arrow 3). The directory server 11 adds names corresponding to the phone numbers, 1234567 Bob Brown, 1234587 Bill Brin and provides these to the ACF 5 (arrow 4). The suggested phone numbers and names are returned to the user equipment 6 (arrow 5). The phone numbers are displayed on the display of the user equipment 6 as clickable objects (arrow 6). The subscriber then clicks on the desired phone number and the call setup is sent to the communication network 7 (arrow 7).

Alternatively, if the directory server 11 is not used, the ACF 5 sends one or more numbers directly to the subscriber (not illustrated in the figure), which are then presented as clickable objects, whereupon the subscriber is able to swiftly set up a call.

In another scenario, the user intended to dial a number similar to the one he entered. One example is companies that have their own number series for telephony. This could potentially become a problem if not taken into account. For example, colleague A has number 1234 56 and colleague B has number 1234 65. Using the ACF 5, this may change A to B and vice versa depending on whom is the most frequently called colleague. In order to overcome this problem, the built up call, i.e. the entered digits, is analyzed to find similarities in number series. In this case 1234 would be seen as the companies prefix and the last two digits as the extensions. Once this is done the KDSU 1 will recognize the company number and avoid the auto completions. This means that the KDSU 1 is configured with the company prefixes, e.g. 1234 in the above case. When the KDSU 1 receives a number starting with 1234, the ACF 5 is deactivated or the triggering thereof is made more restrictive. For example, the ACF 5 could be activated only when the subscriber has entered a larger chunk of digits, e.g. six digits for the above company prefix example of four digits (1234). The activation of the WNF 4 could also be adjusted in view of company numbers, for example by having a decreased maximum edit distance, e.g. requiring only one edition to transform one number to the other instead of e.g. two.

From the foregoing description it is clear that the KDSU 1 in one embodiment is implemented as a KDSU server 100, e.g. an application server, suitable for conveying a set of contact identification data to the user equipment 6 that is associated with the communication system 7. The term "associated with" is meant to describe user equipment 6 for use in a compatible communication system 7, the communication system 7 for example conforming to Long Term Evolution (LTE) standard an in the future any one of the 4G-standards according to International Telecommunication Union (ITU). It is noted that the invention may be implemented in a wireless communication system as well as in wireline communication system.

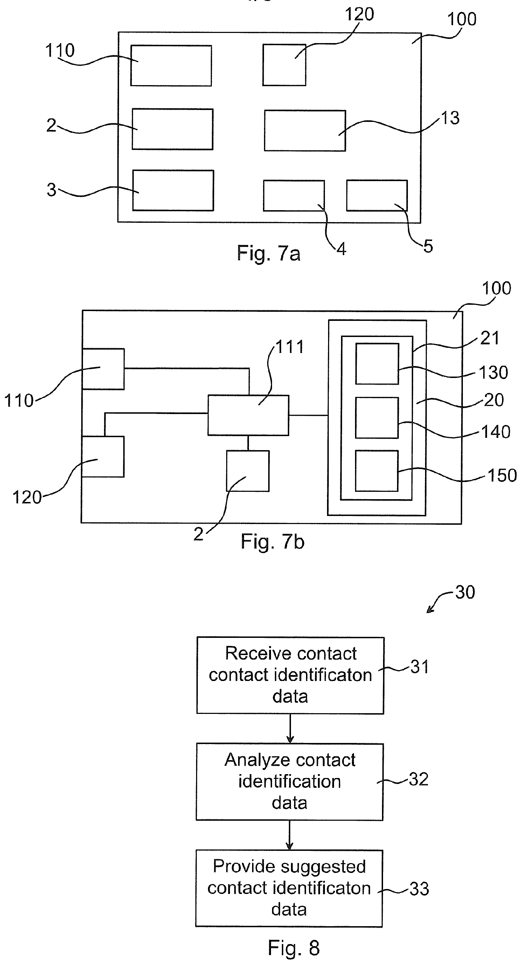

Figure 7a illustrates schematically the KDSU server 100 comprising a receiving unit 110 for receiving contact identification data from the user equipment 6. The receiving unit 110 may be any input unit for receiving the contact identification data. The receiving unit 110 of the KDSU 100 may be adapted in dependence on the communication method used by the user equipment 6. As the KDSU 100 does not need to be part of the communication network 7, the access requests from the user equipment 6 to the KDSU may, but need not, go over the communication network 7. The receiving unit 110 may thus be an input unit able to receive communication from a node of the communication network 7, or an input unit able to receive communication over e.g. a wireless local area network (WLAN).

The KDSU server 100 further comprises the data storage module 2, which comprises user specific data, i.e. the subscriber call log 10.

The KDSU server 100 further comprises the analyzing module 3, which is arranged to analyze received contact identification data. The analysis may comprise determining the received contact identification data to be an incomplete or complete set of contact identification data. Upon receiving, from the user equipment 6, contact identification data, e.g. a few digits or all digits in a called phone number, a determination is made by the analyzing module 3 whether the received contact identification data should be handled using the WNF 4 or by the ACF 5. This determination is made by determining if the received contact identification data is an incomplete set of contact identification data or a complete set of contact identification data. If the received contact identification data is an incomplete set of contact identification data, i.e. an incomplete phone number, the ACF 5 is activated. If the received contact identification data is not an incomplete phone number, then it is determined that it is an erroneous number, i.e. an invalid number or a wrongly entered number, in which case the WNF 4 is activated.

The analyzing module 3 may provide the functions described above as performed by the processor 18, i.e. analyze received contact identification data and perform necessary processing and calculations e.g. perform the weighted filtering of the contact identification data, based on data received or retrieved from the data storage module 2 and the global data storage module 13. The analyzing module 3 may further perform the calculation of the edit distance.

The analyzing module 3 is further arranged to provide the user equipment 6 with one or more suggested sets of contact identification data based on: the analysis, the user specific data and global data of the analytics database 9. The suggested sets of contact identification data may be provided to the user equipment 6 by a suitable output unit 120, e.g. a transmitting unit. The global data of the analytics database 9 may be conveyed to a global data storage module 13 of the KDSU server 100. How to provide the suggested sets of contact identification data has been thoroughly described above.

The respective modules described in conjunction with figure 7a have been disclosed as physically separate modules in the KDSU server 100, and they may be special purpose circuits such as ASICs (Application Specific Integrated Circuits). The invention covers also embodiments of the KDSU server 100 wherein some or all of the modules are implemented as computer program modules running on a general purpose processor. Such an embodiment is described next with reference to figure 7b.

Figure 7b schematically illustrates an embodiment of the KDSU server 100. The analyzing module 3, WNF 4

and ACF 5 described above can be implemented as program modules 130, 140 and 150, respectively, of a computer program 21 comprising code means which when run by a processor 111 in the KDSU server 100 causes the KDSU server 100 to perform the above-described functions and actions. The analyzing module may be a program module 130 that upon determining that the received contact identification data is an incomplete set of contact identification data causes the ACF program module 150 to be activated. The ACF program module 150 then provides a suggested set of contact identification data to the analyzing program module 130, which then provides the suggested set of contact identification data to the user equipment 6. The analyzing module may further be a program module 130 that upon determining that the received contact identification data is a complete set of contact identification data, causes the WNF program module 140 to be activated. The WNF program module 140 then provides a suggested set of contact identification data to the analyzing program module 130, which then provides the suggested set of contact identification data to the user equipment 6.

The processor 111 may not only be a single CPU (central processing unit), but could comprise two or more processing units in the KDSU server 100. For example, the processor 111 may comprise general purpose microprocessors, instruction set processors and/or related chips sets and/or special purpose microprocessors, such as ASICs (application specific integrated circuits). The processor 111 may also comprise board memory for caching purposes. The computer program 21 may be carried by a computer program product 20 in the KDSU server 100 connected to the processor 111. The computer program product 20 comprises a computer readable medium on which the computer program 21 is stored. For example, the computer program product 20 may be a flash memory, a RAM (Random-access memory), ROM (Read-Only memory) or an EEPROM (Electrically Erasable Programmable ROM), and the computer program modules described above could in alternative embodiments be distributed on different computer program products in the form of memories within the KDSU server 100. The computer program product 20 may an optical disc, such as a CD (compact disc) or a DVD (digital versatile disc) or a Blu-Ray disc.

The computer program 21 for conveying a set of contact identification data to a user equipment 6 associated with a communication system 7 is also provided. The computer program 21 comprises computer program code which when run on the on the processor 111 causes the KDSU server 100 to: receive contact identification data from the user equipment 6; analyze received contact identification data, and provide the user of the user equipment with one or more suggested sets of contact identification data based on the analysis, user specific data and global data.

Figure 8 illustrates a flow chart over steps of a method 30 in the KDSU server 100. The method 30 for conveying a set of contact identification data to the user equipment 6 associated with a communication system 7 comprises a first step of receiving 31 contact identification data from the user equipment 6.

The method 30 comprises a second step of analyzing 32 received contact identification data.

The method 30 comprises a third step providing 33 the user equipment 6 with one or more suggested sets of contact identification data based on: the analysis, user specific data and global data.

In an embodiment, the step of analyzing 32 received contact identification data comprises determining the received contact identification data to be an incomplete set of contact identification data or to be a complete set of contact identification data.

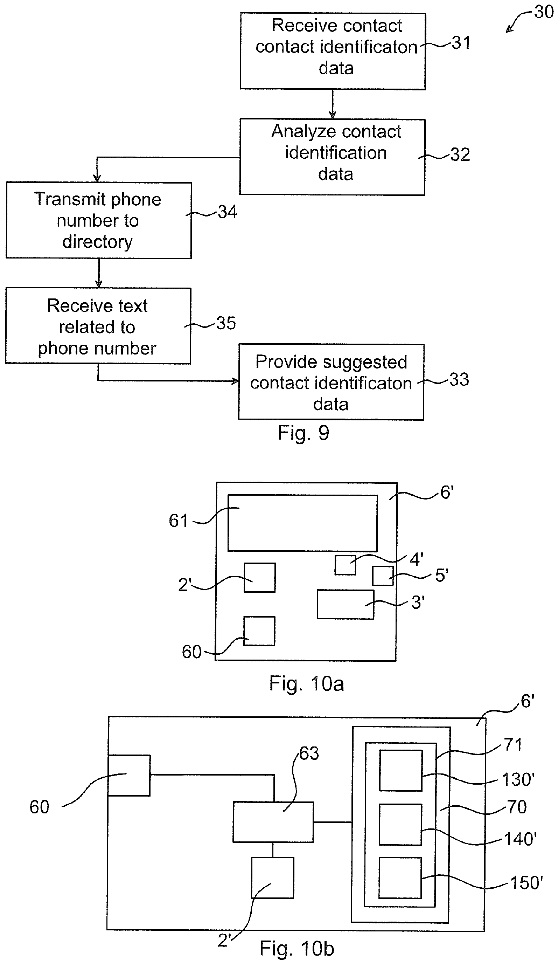

With reference to figure 9, in an embodiment, the suggested set of contact identification data comprises a phone number. The method 30 then comprises the additional steps of transmitting 34 the phone number to a directory server (11), and receiving 35 from the directory server 11 text related to the phone number. The KDSU server 100 then transmits the phone number and the text related to the phone number to the user equipment 6, thus providing the suggested sets of contact identification data.

Figure 10a illustrates schematically the user equipment 6' comprising the display 61 suitable for displaying a suggested set of contact identification data to a user of the user equipment 6'.

The user equipment 6' further comprises a receiving unit 60 for receiving contact identification data input by the user.

The user equipment 6' comprises the data storage module 2' comprising user specific data, and the analyzing module 3'. The analyzing module 3' is a module corresponding to the analyzing module 3 described with reference to figures 7a and 7b, and can be implemented in a corresponding manner.

The respective modules described in conjunction with figure 10a have been disclosed as physically separate modules in the user equipment 6', and they may be special purpose circuits such as ASICs (Application Specific Integrated Circuits). The invention covers also embodiments of the user equipment 6' wherein some or all of the modules are implemented as computer program modules running on a general purpose processor. Such an embodiment is described next with reference to figure 10b.

Figure 10b schematically illustrates an embodiment of the user equipment 6'.

The contact identification data input by the user and received by the receiving unit 60 may be processed by a processor 63, which thus receives from the receiving unit 60 incoming keystrokes when the user presses on keys of a keypad of the user equipment 6' and processes the received data.

The user equipment 6' further comprises means for enabling the display of suggested contact identification data on the display 61. Such means may comprise program code when executed on the processor 63, outputs the contact identification data on the display 61.

The analyzing module 3', WNF 4' and ACF 5' described above can be implemented as program modules of a computer program 71 comprising code means which when run by the processor 63 in the user equipment 6' causes the user equipment 6' to perform the above-described functions and actions. The analyzing module 3', AWM 5', WNF 4' can be implemented as program modules 130', 140' and 150', respectively, of the computer program 71 comprising code means which when run by the processor 63 in the user equipment 6' causes the user equipment 6' to perform the above-described functions and actions. The processor 63 may not only be a single CPU (central processing unit), but could comprise two or more processing units in the user equipment 6'. For example, the processor 63 may comprise general purpose microprocessors, instruction set processors and/or related chips sets and/or special purpose microprocessors, such as ASICs (application specific integrated circuits). The processor 63 may also comprise board memory for caching purposes. The computer program 71 may be carried by a computer program product 70 in the user equipment 6' connected to the processor 63. The computer program product 70 comprises a computer readable medium on which the computer program 71 is stored. For example, the computer program product 70 may be a flash memory, a RAM (Random-access memory), ROM (Read-Only memory) or an EEPROM (Electrically Erasable Programmable ROM), and the computer program modules described above could in alternative embodiments be distributed on different computer program products in the form of memories within the user equipment 6'. The computer program product 70 may an optical disc, such as a CD (compact disc) or a DVD (digital versatile disc) or a Blu-Ray disc.

A computer program 71 for conveying a set of contact identification data to a user equipment 6' associated with a communication system 7 is also provided. The computer program 71 comprises computer program code which when run on the processor 63 in the user equipment 6' causes the user equipment 6' to: receive contact identification data input by the user; analyze received contact identification data; provide one or more suggested sets of contact identification data based on: the analysis, the user specific data and global data of a global data storage module 13', and display, on a display 61, the one or more suggested sets of contact for selection by the user.

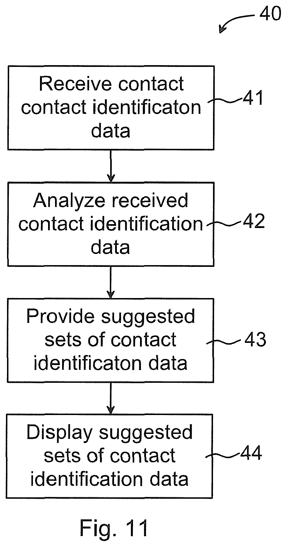

Figure 11 illustrates a flow chart over steps of a method in the user equipment 6'. The method 40 in the user equipment 6' comprises the first step of receiving 41 contact identification data input by the user. The user may for example input the contact identification data physically by means of a keypad or verbally by articulating the contact identification data. The user equipment 6' then comprises corresponding means for receiving the contact identification data, e.g. a processor receiving keystrokes from the keypad or a processor receiving audio waves from a microphone.

The method 40 comprises the second step of analyzing 42 the received contact identification data. This step corresponds to the step 32 of figure 8 and will not be described in further detail.

The method 40 comprises the third step of providing 43 one or more suggested sets of contact identification data based on: the analysis, the user specific data and global data of a global data storage module (13'), and

The method 40 comprises the displaying 44, on the display 61, the one or more suggested sets of contact for selection by the user.

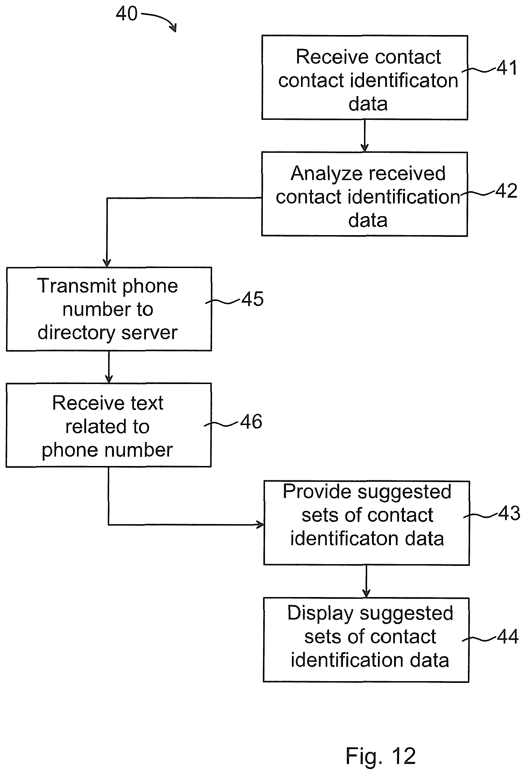

Figure 12 illustrates a flow chart over steps of another embodiment of the method of figure 11. The method comprises the further steps of transmitting 45 the phone number to a directory server 11, and receiving 46 from the directory server 11 text related to the phone number. The text and phone number may then be presented to the user for selection by him or her.

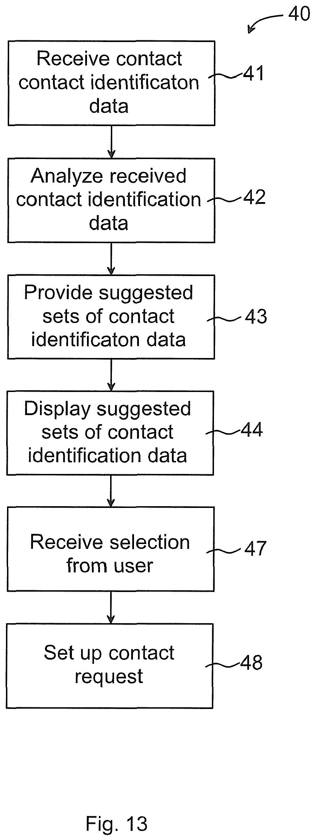

Figure 13 illustrates a flow chart over steps of another embodiment of the method of figure 11 or figure 12. The method comprises the additional steps of receiving 47 a selection made by the subscriber, and setting up 48 a contact request based on the received selection, the contact request being made by means of the communication system 7.

The different embodiments of the invention bring about several advantages, a few of which is mentioned in the following. The keyboard dialing is simplified and the subscriber needs only enter a few digits and get a list of clickable suggested numbers in response. The autocomplete function described makes it easy to dial numbers that are popular within the communication network since also these numbers may be provided when the user has entered the first couple of digits. The wrong number feature provides valuable help for the subscriber who has dialed the wrong number, for example when misplacing digits in the phone number by mistake, or when "almost" remembering the phone number. The subscriber call log may be complemented with numbers that the subscriber has not yet called. Such numbers are provided from the communication network and are useful for a subscriber for example when the subscription is new. The addition of time of day and geographical position increases the accuracy of the suggested numbers. The location of the KDSU in the communication network is valuable for the subscriber having multiple devices as his or hers subscriber specific data is then available from the communication network.

**Claims**

1. A server (100) for conveying a set of contact identification data to a user equipment (6) associated with a communication system (7), **characterized in that** the server (100) comprises:

- a receiving unit (110) for receiving contact identification data from the user equipment (6),
- a data storage module (2) comprising subscriber specific data, and
- an analyzing module (3) arranged to:
- analyze received contact identification data, wherein the analysis determines the received contact identification data to be an incomplete set of contact identification data or a complete set of contact identification data, and
- provide the user equipment (6) with one or more suggested sets of contact identification data based on: the analysis, the subscriber specific data, and global data of an analytics database (9), wherein the global data comprises complete call log data of an operator of the communication system (7), wherein in the event the analysis determines the received contact identification data to be the incomplete set of contact identification data, the analyzing module (3) is arranged to enable an autocomplete function (5) which suggests a complete set of contact identification data, as a suggested set of contact identification data, based on the incomplete set of contact identification data, and wherein in the event the analysis determines the received contact identification data to be the complete set of contact identification data, the analyzing module (3) is arranged to enable a wrong number function (4) which suggests a corrected set of contact identification data, as a suggested set of contact identification data, based on the received contact identification data.

2. The server (100) as claimed in claim 1, wherein the analyzing module (3) is arranged to compare the received contact identification data with the subscriber specific data and/or with the global data and to provide subscriber specific data or global data having a set maximum edit distance to the received contact identification data as a suggested set of contact identification data.

3. The server (100) as claimed in claim 1, wherein in the event the analysis determines the received contact identification data to be a set of complete contact identification data, the analyzing module (3) is arranged to:

- detect the complete contact identification data to be erroneous complete contact identification data, prior to enabling the wrong number function (4) to suggest the corrected set of contact identification data.

4. A method (30) performed by a server (100) for conveying a set of contact identification data to a user equipment (6) associated with a communication system (7), **characterized in that** the method comprises:

- receiving (31) contact identification data from the user equipment (6),
- analyzing (32) received contact identification data, wherein the step of analyzing (32) the received contact identification data comprises determining the received contact identification data to be an incomplete set of contact identification data or a complete set of contact identification data, and
- providing (33) the user equipment (6) with one or more suggested sets of contact identification data based on: the analysis, user specific data and global data of an analytics database (9), wherein the global data comprises complete call log data of an operator of the communication system (7), wherein in the event the analysis determines the received contact identification data to be the incomplete set of contact identification data, an analyzing module (3) is arranged to enable an autocomplete function (5) which suggests a complete set of contact identification data, as a suggested set of contact identification data, based on the incomplete set of contact identification data, and wherein in the event the analysis determines received the contact identification data to be the complete set of contact identification data, the analyzing module (3) is arranged to enable a wrong number function (4) which suggests a corrected set of contact identification data, as a suggested set of contact identification data, based on the received contact identification data.

5. The method as claimed in claim 4 , wherein the suggested set of contact identification data comprises a phone number and wherein the method further comprises:

- transmitting (34) the phone number to a directory server (11), and
- receiving (35) from the directory server (11) text related to the phone number.

6. The method as claimed in claim 5, comprising:

- transmitting to the user equipment (6) the phone number and the text related to the phone number.

**Patentansprüche**

1. Server (100) zur Weiterleitung eines Kontaktidentifizierungsdatensatzes an ein Benutzergerät (6), das mit einem Kommunikationssystem (7) verbunden ist, **dadurch gekennzeichnet, dass** der Server (100) Folgendes umfasst:

   - eine Empfangseinheit (110) zum Empfangen von Kontaktidentifizierungsdaten von dem Benutzergerät (6),
   - ein Datenspeichermodul (2), umfassend abonnentenspezifische Daten, und
   - ein Analysemodul (3), das für Folgendes angeordnet ist:

   - Analysieren empfangener Kontaktidentifizierungsdaten, wobei die Analyse bestimmt, dass die empfangenen Kontaktidentifizierungsdaten ein unvollständiger Kontaktidentifizierungsdatensatz oder ein vollständiger Kontaktidentifizierungsdatensatz sind, und
   - Bereitstellen eines oder mehrerer vorgeschlagener Kontaktidentifizierungsdatensätze für das Benutzergerät (6) auf Grundlage von: der Analyse, den abonnentenspezifischen Daten und globalen Daten einer Analytikdatenbank (9), wobei die globalen Daten vollständige Anrufprotokolldaten eines Bedieners des Kommunikationssystems (7) umfassen, wobei in dem Fall, dass die Analyse bestimmt, dass die empfangenen Kontaktidentifizierungsdaten der unvollständige Kontaktidentifizierungsdatensatz sind, das Analysemodul (3) angeordnet ist, um eine Autovervollständigungsfunktion (5) zu aktivieren, die auf Grundlage des unvollständigen Kontaktidentifizierungsdatensatzes einen vollständigen Kontaktidentifizierungsdatensatz als vorgeschlagenen Kontaktidentifizierungsdatensatz vorschlägt, und wobei in dem Fall, dass die Analyse bestimmt, dass die empfangenen Kontaktidentifizierungsdaten der vollständige Kontaktidentifizierungsdatensatz sind, das Analysemodul (3) angeordnet ist, um eine Falschnummernfunktion (4) zu aktivieren, die auf Grundlage der empfangenen Kontaktidentifizierungsdaten einen korrigierten Kontaktidentifizierungsdatensatz als einen vorgeschlagenen Kontaktidentifizierungsdatensatz vorschlägt.

2. Server (100) nach Anspruch 1, wobei das Analysemodul (3) angeordnet ist, um die empfangenen Kontaktidentifizierungsdaten mit den abonnentenspezifischen Daten und/oder mit den globalen Daten zu vergleichen und um abonnentenspezifische Daten oder globale Daten, die eine festgelegte maximalen Editierdistanz zu den empfangenen Kontaktidentifizierungsdaten aufweisen, als einen vorgeschlagenen Kontaktidentifizierungsdatensatz bereitzustellen.

3. Server (100) nach Anspruch 1, wobei in dem Fall, dass die Analyse bestimmt, dass die empfangenen Kontaktidentifizierungsdaten ein vollständiger Kontaktidentifizierungsdatensatz sind, das Analysemodul (3) für Folgendes angeordnet ist:

   - Erfassen der vollständigen Kontaktidentifizierungsdaten als fehlerhafte vollständige Kontaktidentifizierungsdaten vor der Aktivierung der Falschnummernfunktion (4), um den korrigierten Kontaktidentifizierungsdatensatz vorzuschlagen.

4. Verfahren (30), durchgeführt von einem Server (100), zur Weiterleitung eines Kontaktidentifizierungsdatensatzes an ein Benutzergerät (6), das mit einem Kommunikationssystem (7) verbunden ist, **dadurch gekennzeichnet, dass** das Verfahren Folgendes umfasst:

   - Empfangen (31) von Kontaktidentifizierungsdaten von dem Benutzergerät (6),
   - Analysieren (32) empfangener Kontaktidentifizierungsdaten, wobei der Schritt des Analysierens (32) der empfangenen Kontaktidentifizierungsdaten das Bestimmen umfasst, dass die empfangenen Kontaktidentifizierungsdaten ein unvollständiger Kontaktidentifizierungsdatensatz oder ein vollständiger Kontaktidentifizierungsdatensatz sind, und
   - Bereitstellen (33) eines oder mehrerer vorgeschlagener Kontaktidentifizierungsdatensätze für das Benutzergerät (6) auf Grundlage von: der Analyse, benutzerspezifischen Daten und globalen Daten einer Analytikdatenbank (9), wobei die globalen Daten vollständige Anrufprotokolldaten eines Bedieners des Kommunikationssystems (7) umfassen, wobei in dem Fall, dass die Analyse bestimmt, dass die empfangenen Kontaktidentifizierungsdaten der unvollständige Kontaktidentifizierungsdatensatz sind, ein Analysemodul (3) angeordnet ist, um eine Autovervollständigungsfunktion (5) zu aktivieren, die auf Grundlage des unvollständigen Kontaktidentifizierungsdatensatzes einen vollständigen Kontaktidentifizierungsdatensatz als vorgeschlagenen Kontaktidentifizierungsdatensatz vorschlägt, und wobei in dem Fall, dass die Analyse bestimmt, dass die empfangenen Kontaktidentifizierungsdaten der vollständige Kontaktidentifizierungsdatensatz sind, das Analysemodul (3) angeordnet ist, um eine Falschnummernfunktion (4) zu aktivieren, die auf Grundlage der empfangenen Kontaktidentifizierungsdaten einen korrigierten Kontaktidentifizierungsdatensatz als einen vorgeschlagenen Kontaktidentifizierungsdatensatz vorschlägt.

5. Verfahren nach Anspruch 4, wobei der vorgeschlagene Kontaktidentifizierungsdatensatz eine Telefonnummer umfasst und wobei das Verfahren ferner Folgendes umfasst:

- Übertragen (34) der Telefonnummer auf einen Verzeichnisserver (11), und
- Empfangen (35) von Text in Bezug auf die Telefonnummer von dem Verzeichnisserver (11).

6. Verfahren nach Anspruch 5, umfassend:

- Übertragen der Telefonnummer und des Textes in Bezug auf die Telefonnummer auf das Benutzergerät (6).

**Revendications**

1. Serveur (100) destiné à l'acheminement d'un ensemble de données d'identification de contact à un équipement d'utilisateur (6) associé à un système de communication (7), **caractérisé en ce que** le serveur (100) comprend :

- une unité de réception (110) destinée à recevoir les données d'identification de contact en provenance de l'équipement d'utilisateur (6),
- un module de stockage de données (2) comprenant des données spécifiques à un abonné, et
- un module d'analyse (3) conçu pour :

- analyser les données d'identification de contact reçues, l'analyse déterminant si les données d'identification de contact reçues consistent en un ensemble incomplet de données d'identification de contact ou un ensemble complet de données d'identification de contact, et
- fournir à l'équipement d'utilisateur (6) un ou plusieurs ensembles suggérés de données d'identification de contact basés sur : l'analyse, les données spécifiques à l'abonné, et les données globales d'une base de données d'analyse (9), les données globales comprenant les données complètes du journal des appels d'un opérateur du système de communication (7), dans lequel, dans le cas où l'analyse détermine que les données d'identification de contact reçues consistent en un ensemble incomplet de données d'identification de contact, le module d'analyse (3) est agencé pour activer une fonction de saisie semi-automatique (5) qui suggère un ensemble complet de données d'identification de contact, en tant qu'ensemble suggéré de données d'identification de contact, basé sur l'ensemble incomplet de données d'identification de contact, et dans lequel, dans le cas où l'analyse détermine que les données d'identification de contact reçues consistent en l'ensemble complet de données d'identification de contact, le module d'analyse (3) est agencé pour activer une fonction de numéro erroné (4) qui suggère un ensemble corrigé de données d'identification de contact, en tant qu'ensemble suggéré de données d'identification de contact, basé sur les données d'identification de contact reçues.

2. Serveur (100) selon la revendication 1, dans lequel le module d'analyse (3) est agencé pour comparer les données d'identification de contact reçues avec les données spécifiques à l'abonné et/ou avec les données globales et pour fournir les données spécifiques à l'abonné ou les données globales présentant une distance d'édition maximale définie par rapport aux données d'identification de contact reçues en tant qu'ensemble suggéré de données d'identification de contact.

3. Serveur (100) selon la revendication 1, dans lequel, dans le cas où l'analyse détermine que les données d'identification de contact reçues consistent en un ensemble de données d'identification de contact complètes, le module d'analyse (3) est conçu pour :

- détecter les données d'identification de contact complètes qui sont des données d'identification de contact complètes erronées, avant d'activer la fonction de numéro erroné (4) pour suggérer l'ensemble corrigé de données d'identification de contact.

4. Procédé (30) mis en oeuvre par un serveur (100) destiné à l'acheminement d'un ensemble de données d'identification de contact à un équipement d'utilisateur (6) associé à un système de communication (7), **caractérisé en ce que** le procédé comprend :

- la réception (31) de données d'identification de contact en provenance de l'équipement d'utilisateur (6),
- l'analyse (32) des données d'identification de contact reçues, dans lequel l'étape d'analyse (32) des données d'identification de contact reçues consiste à déterminer si les données d'identification de contact reçues consistent en un ensemble incomplet de données d'identification de contact ou un ensemble complet de données d'identification de contact, et
- la fourniture (33) à l'équipement d'utilisateur (6) d'un ou plusieurs ensembles suggérés de données d'identification de contact basés sur : l'analyse, les données spécifiques à l'utilisateur et les données globales d'une base de données d'analyse (9), les données globales comprenant les données complètes du journal des appels d'un opérateur du système de communication (7), dans lequel, dans le cas où l'analyse détermine que les données d'identification de contact reçues consistent en un ensemble incomplet de données d'identification de contact, un module d'analyse (3) est agencé pour activer une fonction de saisie semi-automatique (5) qui suggère un ensemble complet de données d'identification de contact, en tant qu'ensemble suggéré de données d'identification de contact, basé sur l'ensemble incomplet de données d'identification de contact, et dans lequel, dans le cas où l'analyse détermine que les données d'identification de contact reçues consistent en l'ensemble complet de données d'identification de contact, le module d'analyse (3) est agencé pour activer une fonction de numéro erroné (4) qui suggère un ensemble corrigé de données d'identification de contact, en tant qu'ensemble suggéré de données d'identification de contact, basé sur les données d'identification de contact reçues.

5. Procédé selon la revendication 4, dans lequel l'ensemble suggéré de données d'identification de contact comprend un numéro de téléphone et le procédé comprenant en outre :

- la transmission (34) du numéro de téléphone à un serveur d'annuaire (11), et
- la réception (35), en provenance du serveur d'annuaire (11), d'un texte associé au numéro de téléphone.

6. Procédé selon la revendication 5, comprenant :

- la transmission à l'équipement d'utilisateur (6) du numéro de téléphone et du texte associé au numéro de téléphone.

14

13

1

100

KDSU

3

WNF 4

ACF 5

Directory server

11

2

10

Mobile network

Analytics

9

Call log

6

7

8

15

Fig. 1

10 Subscriber call log

Global call log 14

α = 0.9

β = 0.1

16 Merged subscriber call log 17

Called number = 123456;
ToD = 16.00,
Geo. = (Long.Lat)

Weighted filtering

19

123546
123457

18

Fig. 2

Fig. 3

1. MSISDN, called number time stamp

a. List of prioritised numbers

Fig. 4

Fig. 5

Fig. 6

Fig. 7a

Fig. 7b

| Receive contact contact identificaton data | 31 |
| Analyze contact identification data | 32 |
| Provide suggested contact identificaton data | 33 |

Fig. 8

Fig. 9

Fig. 10a

Fig. 10b

Fig. 11

40

Receive contact
contact identificaton
data — 41

Analyze received
contact identification
data — 42

Transmit phone
number to
directory server — 45

Receive text
related to
phone number — 46

Provide suggested
sets of contact
identificaton data — 43

Display suggested
sets of contact
identification data — 44

Fig. 12

40

Receive contact
contact identificaton
data —41

Analyze received
contact identification
data —42

Provide suggested
sets of contact
identificaton data —43

Display suggested
sets of contact
identification data —44

Receive selection
from user —47

Set up contact
request —48

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6285753 B1
- US 2006229063 A1
- US 2009234826 A1
- US 2010306191 A1